# EUROPEAN PATENT APPLICATION

(11) **EP 3 384 782 A1**
(43) Date of publication of application: **10.10.2018**
(21) Application number: 16870591.1
(22) Date of filing: 28.11.2016
(51) Int. Cl.: A23L 2/00, A23F 3/16, A23F 5/24

(54) **BEVERAGE CONTAINING HYDROXYTYROSOL**

(30) Priority: 30.11.2015 JP 2015234037; 30.11.2015 JP 2015234039; 30.11.2015 JP 2015234048; 14.03.2016 JP 2016049403
(71) Applicant: Suntory Holdings Limited, Kita-ku, Osaka-shi Osaka 530-8203 (JP)
(72) Inventor: FUWA, Takashi, Kawasaki-shi Kanagawa 211-0067 (JP); NAKAO, Yuki, Kawasaki-shi Kanagawa 211-0067 (JP); MATSUBAYASHI, Hideki, Kawasaki-shi Kanagawa 211-0067 (JP)
(74) Representative: Vossius & Partner Patentanwälte Rechtsanwälte mbB
(86) International application number: PCT/JP2016/085153
(87) International publication number: WO 2017/094654

(57) **Abstract**

The present invention has as its objects to provide beverages that contain hydroxytyrosol but are comfortable to drink, and to provide a method for reducing the hydroxytyrosol-derived harshness and off-flavor of a hydroxytyrosol-containing beverage.

A beverage comprising 0.5 to 50 mg/100 mL of hydroxytyrosol, and further comprising ethanol and/or propylene glycol. A beverage comprising 0.5 to 50 mg/100 mL of hydroxytyrosol, and further comprising caffeine. A beverage comprising 0.5 to 50 mg/100 mL of hydroxytyrosol, and further comprising glucose and maltose at a (weight) ratio of [glucose]/[maltose] of 0.001 to 1.

## Description

### TECHNICAL FIELD

The present invention relates to beverages comprising hydroxytyrosol.

### BACKGROUND ART

Olive (*Olea europaea*) belongs to the genus *Olea* of the family *Oleaceae* and is widely grown in many areas including Mediterranean area. Olive fruits are widely used worldwide for various applications, such as olive oil extraction and food use, and have a long history of being eaten.

It has been reported that olive fruits contain polyphenols such as oleuropein, hydroxytyrosol and acteoside (NPLs 1, 2), and that an olive extract and such polyphenolic components as mentioned above have anti-atherosclerotic activity (NPL 3), anti-hypertensive activity (PTL 1), anti-bone loss activity (NPL 4), and the like. Further, it has been reported that an olive extract has antioxidant, whitening, anti-skin aging and antitumor activities (PTL 2).

Hydroxytyrosol is known as one of the major polyphenolic components present in olive and having antioxidant activity. It is generally known that the antioxidant activity is useful for prevention and amelioration of lifestyle-related diseases such as hypertension, hyperlipidemia and diabetes, and other diseases such as angina pectoris, myocardial infarct, cerebral circulatory disturbance, and malignant tumors. Thus, the development of foods and beverages containing such antioxidant ingredients has been strongly expected.

### CITATION LIST

### PATENT LITERATURES

PTL 1: Japanese Translation of PCT International Publication No. JP 2009-533365
PTL 2: Japanese Patent Application Publication No. JP 2002-186453

### NON-PATENT LITERATURES

NPL 1: J. Agric Food Chem, Vol.52, pp.479-484, 2004
NPL 2: J. Agric Food Chem, Vol.53, pp.8963-8969, 2005
NPL 3: Atherosclerosis, Vol.188, No.1, pp.35-42, 2006
NPL 4: Clin Nutr, Vol.25, No.5, pp.859-868, 2006

### SUMMARY OF INVENTION

### TECHNICAL PROBLEM

As mentioned above, hydroxytyrosol is an ingredient that has antioxidant activity and is very useful for prevention and amelioration of lifestyle-related and other diseases. However, hydroxytyrosol has some problems, because this ingredient with peculiar harshness and off-flavor, when added to beverages, significantly deteriorates the palatability of the beverages. For example, when hydroxytyrosol-containing beverages deteriorate with exposure to light, the beverages may give off-taste or off-flavor such as resinous smell or may have an astringent taste.

Therefore, an object of the present invention is to provide beverages that contain hydroxytyrosol but are comfortable to drink.

Another object of the present invention is to provide a method for reducing the hydroxytyrosol-derived harshness and off-flavor (e.g., resinous smell caused by light exposure, and astringent taste) of a hydroxytyrosol-containing beverage.

### SOLUTION TO PROBLEM

The present inventors have made intensive studies to achieve the aforementioned objects and as a result found that when ethanol and propylene glycol are incorporated in a beverage containing hydroxytyrosol, a hydroxytyrosol-derived unfavorable flavor (more specifically, resinous smell caused by light-induced deterioration) can be improved. The inventors also found that when caffeine is incorporated in a beverage containing hydroxytyrosol, or when glucose and maltose are incorporated in such a beverage to give a specified ratio of glucose to maltose, a hydroxytyrosol-derived unfavorable flavor (more specifically, lingering astringent aftertaste) can be improved. On the basis of these findings, the inventors have completed the present invention. This invention is directed, but not limited, to the following.
(1) A beverage comprising 0.5 to 50 mg/100 mL of hydroxytyrosol, and ethanol or propylene glycol.
(2) A beverage comprising 0.5 to 50 mg/100 mL of hydroxytyrosol, and ethanol and propylene glycol.
(3) The beverage as set forth in (1) or (2), wherein ethanol is present in an amount of 0.005 to 1.5 wt.%.
(4) The beverage as set forth in any of (1) to (3), wherein propylene glycol is present in an amount of 0.005 to 1.5 wt.%.
(5) The beverage as set forth in any of (1) to (4), wherein hydroxytyrosol and ethanol are present at a weight ratio ([hydroxytyrosol]/[ethanol]) of 0.1 to 2000.
(6) The beverage as set forth in any of (1) to (5), wherein hydroxytyrosol and propylene glycol are present at a weight ratio ([hydroxytyrosol]/[propylene glycol]) of 0.1 to 2000.
(7) The beverage as set forth in any of (2) to (6), wherein ethanol and propylene glycol are present at a weight ratio ([ethanol]/[propylene glycol]) of 0.01 to 100.
(8) The beverage as set forth in any of (1) to (7), wherein the beverage is a clear beverage.
(9) A method for improving the flavor of a beverage comprising 0.5 to 50 mg/100 mL of hydroxytyrosol, the method comprising the step of incorporating ethanol or propylene glycol.
(10) A beverage comprising 0.5 to 50 mg/100 mL of hydroxytyrosol, and caffeine.
(11) The beverage as set forth in (10), wherein caffeine is present at a concentration of 10 to 210 mg/100 mL.
(12) The beverage as set forth in (10) or (11), wherein hydroxytyrosol and caffeine are present at a weight ratio ([hydroxytyrosol]/[caffeine]) of 0.003 to 1.
(13) The beverage as set forth in any of (10) to (12), wherein the beverage is a tea beverage.
(14) The beverage as set forth in any of (10) to (12), wherein the beverage is a coffee beverage.
(15) A method for improving the flavor of a beverage comprising 0.5 to 50 mg/100 mL of hydroxytyrosol, the method comprising the step of incorporating caffeine.
(16) A beverage comprising 0.5 to 50 mg/100 mL of hydroxytyrosol, and further comprising glucose and maltose at a (weight) ratio of [glucose]/[maltose] of 0.001 to 1.
(17) The beverage as set forth in (16), wherein hydroxytyrosol, and glucose and maltose are present at a weight ratio ([hydroxytyrosol]/[glucose]+[maltose]) of 0.0001 to 0.005.
(18) The beverage as set forth in (16) or (17), wherein the beverage is a tea beverage.
(19) A method for improving the flavor of a beverage comprising 0.5 to 50 mg/100 mL of hydroxytyrosol, the method comprising the step of adjusting the (weight) ratio of [glucose]/[maltose] in the beverage to be in the range of 0.001 to 1.

### ADVANTAGEOUS EFFECT OF INVENTION

The present invention can provide a beverage having antioxidant activity. Further, this invention can provide a beverage that contains hydroxytyrosol but is improved in hydroxytyrosol-derived unfavorable flavor (e.g., resinous smell caused by light-induced deterioration, and astringent taste). The beverage of this invention is also useful for improving blood flow.

### DESCRIPTION OF EMBODIMENTS

### 1. Beverage containing ethanol and/or propylene glycol

One mode of the present invention is a beverage comprising hydroxytyrosol and further comprising ethanol and/or propylene glycol.

### (Hydroxytyrosol)

Hydroxytyrosol is one of the polyphenols found in various plants such as olive. This polyphenol is represented by the structural formula shown below, and is also called 4-(2-Hydroxyethyl)-1,2-benzenediol. Hydroxytyrosol is registered under CAS Registry No. 10597-60-1.

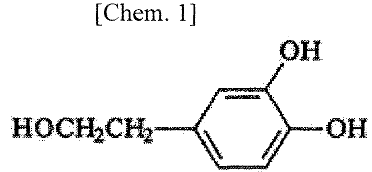

Hydroxytyrosol is known not only to have very potent antioxidant activity but also to be able to prevent further oxidization of bad cholesterol, LDL, into worse cholesterol, oxidized LDL. It is also known that hydroxytyrosol has an ability to improve blood flow.

The origin of hydroxytyrosol to be used is not particularly limited, and it is acceptable to use a commercially available hydroxytyrosol ingredient, or a hydroxytyrosol ingredient prepared on one's own by a *per se* known method, such as an ingredient isolated and purified from a plant like olive using a solvent like water or oil. A plant extract containing hydroxytyrosol may also be used.

In the present invention, hydroxytyrosol may be in the form of a glycoside. As referred to herein, the "glycoside" refers to a compound formed by the bonding of the hydroxyl group of a sugar to a non-sugar compound. The sugar in the glycoside is not particularly limited, and may be a monosaccharide or a di- or higher saccharide. The type of the sugar is also not particularly limited, and can be exemplified by aldoses such as glucose, mannose, galactose, fucose, rhamnose, arabinose and xylose, ketoses such as fructose, uronic acids such as glucuronic acid, galacturonic acid and mannuronic acid, as well as apiose and rutinose. Further, the sugar used in the glycoside may be a D-sugar or an L-sugar.

The beverage of the present invention comprises 0.5 to 50 mg/100 mL of hydroxytyrosol. From the viewpoint of exhibiting antioxidant activity and/or blood flow improving activity, the beverage of this invention is preferred to comprise not less than 0.5 mg/100 mL of hydroxytyrosol. However, beverages comprising not less than 0.5 mg/100 mL of hydroxytyrosol tend to leave a bad aftertaste. In particular, beverages comprising not less than 0.8 mg/100 mL of hydroxytyrosol tend to give off-taste or off-flavor (resinous smell) as they deteriorate with exposure to light. The content of hydroxytyrosol in the beverage of this invention is in the range of preferably 0.5 to 5 mg/100 mL, more preferably 0.5 to 2.5 mg/100 mL. When hydroxytyrosol is in the form of a glycoside, a hydrate or the like, the hydroxytyrosol content is calculated in terms of its free form. In this invention, the hydroxytyrosol content can be measured by following a method known to skilled artisans-for example, using LC-MS/MS, HPLC or the like under appropriately designed conditions.

### (Ethanol, propylene glycol)

The beverage of the present invention also comprises ethanol and/or propylene glycol. The content of ethanol in the beverage of this invention is not particularly limited, but is generally in the range of 0.005 to 1.5 wt.%, preferably 0.01 to 1 wt.%, more preferably 0.05 to 0.5 wt.%. The content of propylene glycol in the beverage of this invention is not particularly limited, but is generally in the range of 0.005 to 1.5 wt.%, preferably 0.01 to 1 wt.%, more preferably 0.05 to 0.5 wt.%. As used herein, "wt.%" refers to percent weight/volume (% w/v), unless otherwise specified.

The weight ratio of hydroxytyrosol to ethanol ([hydroxytyrosol]/[ethanol]) in the beverage of the present invention is not particularly limited, but is generally in the range of 0.1 to 2000, preferably 0.5 to 1000, more preferably 1 to 300. The weight ratio of hydroxytyrosol to propylene glycol ([hydroxytyrosol]/[propylene glycol]) in the beverage of this invention is not particularly limited, but is generally in the range of 0.1 to 2000, preferably 0.5 to 1000, more preferably 1 to 300.

Ethanol and propylene glycol can be incorporated to give a weight ratio ([ethanol]/[propylene glycol]) of 0.01 to 100. This weight ratio is preferably in the range of 0.02 to 50, more preferably 0.1 to 10.

Ethanol and propylene glycol can also be incorporated to give a weight ratio of hydroxytyrosol to these components ([hydroxytyrosol]/[ethanol]+[propylene glycol]) of 0.05 to 1000. This weight ratio is preferably in the range of 0.25 to 500, more preferably 0.5 to 150.

The contents of ethanol and propylene glycol in the beverage of the present invention can be measured using a method known to skilled artisans, such as high performance liquid chromatography (HPLC).

In another aspect, the present invention relates to a method for improving the flavor of a beverage comprising 0.5 to 50 mg/100 mL of hydroxytyrosol, the method comprising the step of incorporating ethanol or propylene glycol into the beverage.

### (Beverage)

The type of the beverage of the present invention is not particularly limited, and the beverage can be of any type, such as carbonated beverage, non-carbonated beverage, alcoholic beverage, non-alcoholic beverage, isotonic beverage, nutritional beverage, functional beverage, or flavored water beverage.

The beverage of the present invention is preferably a clear beverage. The "clear beverage" refers to a beverage that is visually clear like water, without white turbidity like isotonic beverages or cloudiness like cloudy fruit juices. The clarity of the beverage can be quantified by using, for example, a known measurement technique of liquid turbidity. For example, an absorbance of not more than 0.06 as measured at a wavelength of 660 nm with an ultraviolet and visible spectrophotometer (e.g., UV-1600 produced by Shimadzu Corporation) can be regarded as "clear".

The color of the beverage is not particularly limited, and the beverage may be colored as long as it retains such a level of clarity as defined above. The color of the beverage can be quantified by using, for example, a known measurement technique of object color difference. For example, a ΔE value of not more than 3.5 as determined by measuring transmitted light with a colorimetric color difference meter (e.g., ZE2000 produced by Nippon Denshoku Industries Co., Ltd.) using pure water as a standard reference material can be regarded as "colorless". Preferably, the ΔE value is not more than 2.3.

The beverage of the present invention may have incorporated therein not only the aforementioned components but also any different additives and others depending on the type of the beverage. Examples of such different additives include sweeteners made with other sugars than the aforementioned ones, acidulants, flavorants, vitamins, pigments, antioxidants, emulsifiers, preservatives, extracts, dietary fibers, pH adjustors, and quality stabilizers.

The beverage of the present invention can be produced by incorporating the aforementioned components in appropriate amounts. Further, the beverage of this invention is made into a packaged beverage by following a sterilization step or the like depending on the need. For example, the beverage can be made into a sterilized, packaged beverage by following the procedure involving the steps of packing the beverage into a container and then subjecting the packed beverage to heat sterilization or the like, or the procedure involving the steps of sterilizing the beverage and then packing it into a container in an aseptic environment.

The type of the container is not particularly limited, and examples of the container include PET bottle, can, glass bottle, and carton. In particular, clear and colorless containers such as PET and glass bottles may well be said to be preferable, because the color of beverages contained in such containers can be easily discerned, and because if clear beverages are packed in such containers, the appearance of the beverages can be confirmed after packaging.

### 2. Beverage containing caffeine

Another mode of the present invention is a beverage comprising hydroxytyrosol and caffeine.

### (Hydroxytyrosol)

The descriptions of hydroxytyrosol can be found above.

The beverage of the present invention comprises 0.5 to 50 mg/100 mL of hydroxytyrosol. From the viewpoint of exhibiting antioxidant activity and/or blood flow improving activity, the beverage of this invention is preferred to comprise not less than 0.5 mg/100 mL of hydroxytyrosol. However, beverages comprising not less than 0.5 mg/100 mL of hydroxytyrosol tend to leave a bad aftertaste. In particular, beverages comprising not less than 0.8 mg/100 mL of hydroxytyrosol tend to leave a lingering astringent aftertaste. The content of hydroxytyrosol in the beverage of this invention is in the range of preferably 0.8 to 5 mg/100 mL, more preferably 0.8 to 2.5 mg/100 mL. When hydroxytyrosol is in the form of a glycoside, a hydrate or the like, the hydroxytyrosol content is calculated in terms of its free form. In this invention, the hydroxytyrosol content can be measured by following a method known to skilled artisans -- for example, using LC-MS/MS, HPLC or the like under appropriately designed conditions.

### (Caffeine)

The content of caffeine in the beverage of the present invention is not particularly limited, but is generally in the range of 10 to 210 mg/100 mL, preferably 50 to 200 mg/100 mL, more preferably 100 to 160 mg/100 mL. When caffeine is in the form of a hydrate or the like, the caffeine content is calculated in terms of its free form. The caffeine content can be measured and quantified by a method based on high performance liquid chromatography (HPLC).

In the present invention, caffeine can be used in the form of a commercially available reagent, a pure product (a purified product containing at least 98% caffeine) or a crudely purified product (containing 50 to 98% caffeine), or in the form of an extract of a caffeine-containing plant (*e.g.,* tea leaf, cola nut, coffee bean) or a concentrate thereof. In the beverage of this invention, a crudely purified product or a pure product is preferably used as caffeine, with a pure product being particularly preferably used.

In the beverage of the present invention, caffeine can be incorporated to give a weight ratio of hydroxytyrosol to caffeine ([hydroxytyrosol]/[caffeine]) of 0.003 to 1. From the viewpoint of improvement of hydroxytyrosol-derived flavor, this weight ratio ([hydroxytyrosol]/[caffeine]) is in the range of preferably 0.005 to 0.1, more preferably 0.01 to 0.05.

In another aspect, the present invention relates to a method for improving the flavor of a beverage comprising 0.5 to 50 mg/100 mL of hydroxytyrosol, the method comprising the step of incorporating caffeine into the beverage.

### (Beverage)

The type of the beverage of the present invention is not particularly limited, and the beverage can be of any type, such as carbonated beverage, non-carbonated beverage, alcoholic beverage, non-alcoholic beverage, coffee beverage, tea beverage, cocoa beverage, nutritional beverage, or functional beverage. In this invention, preferred types of the beverage include tea beverages such as green tea, roasted green tea, blend tea, barley tea, mate tea, jasmine tea, black tea, oolong tea, and du zhong tea, as well as coffee beverages.

The beverage of the present invention may have incorporated therein not only the aforementioned components but also any different additives and others depending on the type of the beverage. Examples of such different additives include sweeteners made with other sugars than the aforementioned ones, acidulants, flavorants, vitamins, pigments, antioxidants, emulsifiers, preservatives, extracts, dietary fibers, pH adjustors, and quality stabilizers.

The beverage of the present invention can be produced by incorporating the aforementioned components in appropriate amounts. Further, the beverage of this invention is made into a packaged beverage by following a sterilization step or the like depending on the need. For example, the beverage can be made into a sterilized, packaged beverage by following the procedure involving the steps of packing the beverage into a container and then subjecting the packed beverage to heat sterilization or the like, or the procedure involving the steps of sterilizing the beverage and then packing it into a container in an aseptic environment.

The type of the container is not particularly limited, and any common containers for beverage use can be used, for example, resin containers such as PET bottle, paper containers such as carton, glass containers such as glass bottle, metal containers such as aluminum and steel cans, and aluminum pouch.

### 3. Beverage containing glucose and maltose

Still another mode of the present invention is a beverage comprising hydroxytyrosol and further comprising glucose and maltose.

### (Hydroxytyrosol)

The descriptions of hydroxytyrosol can be found above.

The beverage of the present invention comprises 0.5 to 50 mg/100 mL of hydroxytyrosol. From the viewpoint of exhibiting antioxidant activity and/or blood flow improving activity, the beverage of this invention is preferred to comprise not less than 0.5 mg/100 mL of hydroxytyrosol. However, beverages comprising not less than 0.5 mg/100 mL of hydroxytyrosol tend to leave a bad aftertaste. In particular, beverages comprising not less than 0.8 mg/100 mL of hydroxytyrosol tend to leave a lingering astringent aftertaste. The content of hydroxytyrosol in the beverage of this invention is in the range of preferably 0.8 to 5 mg/100 mL, more preferably 0.8 to 2.5 mg/100 mL. When hydroxytyrosol is in the form of a glycoside, a hydrate or the like, the hydroxytyrosol content is calculated in terms of its free form. In this invention, the hydroxytyrosol content can be measured by following a method known to skilled artisans -- for example, using LC-MS/MS, HPLC or the like under appropriately designed conditions.

### (Glucose, maltose)

The beverage of the present invention further comprises glucose and maltose to give a weight ratio ([glucose]/[maltose]) of 0.001 to 1. The weight ratio of glucose to maltose in the beverage of this invention is in the range of preferably 0.02 to 0.5, more preferably 0.025 to 0.25. When the (weight) ratio of glucose to maltose in the hydroxytyrosol-containing beverage falls within the particular range mentioned above, an unfavorable flavor derived from hydroxytyrosol is improved.

The contents of glucose and maltose in the beverage are not particularly limited as long as the ratio of glucose to maltose falls within the range mentioned above. These contents can be determined taking into consideration the desired sweetness and the like depending on the type of the beverage. For example, when the beverage is a tea beverage, it may contain sucrose only in such a low amount, *e.g.* about 20 to 3000 mg/kg, that one can hardly taste sweetness (in other words, it may predominantly contain only sucrose derived from tea leaves). Or for another example, when the beverage is a sweetened beverage such as sugar-containing beverage, it may contain about 3000 to 100000 mg/kg of sucrose. Thus, the sucrose content in the beverage can be, without limitation, not less than 20 mg/kg, for example in the range of about 20 to 100000 mg/kg, depending on the design of the sweetness of the beverage. The glucose content may be set in line with the sucrose content mentioned above or may be set to a different value from said sucrose content. The maltose content can be determined based on the glucose content and the (weight) ratio mentioned above. The glucose content in the beverage of the present invention is in the range of, for example, 50 to 2500 mg/100 mL, preferably 100 to 2000 mg/100 mL, more preferably 120 to 1000 mg/100 mL. The maltose content in the beverage of this invention is in the range of, for example, 200 to 5000 mg/100 mL, preferably 3000 to 4950 mg/100 mL, more preferably 4000 to 4900 mg/100 mL.

Also, glucose and maltose can be incorporated to give a weight ratio of hydroxytyrosol to the total amount of these components (*i.e.,* total glucose and maltose content) ([hydroxytyrosol]/[glucose]+[maltose]) of 0.0001 to 0.005. From the viewpoint of improvement of hydroxytyrosol-derived flavor, this weight ratio is in the range of preferably 0.00012 to 0.002, more preferably 0.00014 to 0.001.

The contents of glucose and maltose in the beverage can be measured using a method known to skilled artisans, such as high performance liquid chromatography (HPLC).

In another aspect, the present invention relates to a method for improving the flavor of a beverage comprising 0.5 to 50 mg/100 mL of hydroxytyrosol, the method comprising the step of adjusting the weight ratio of glucose to maltose ([glucose]/[maltose]) in the beverage to be in the range of 0.001 to 1.

### (Beverage)

The type of the beverage of the present invention is not particularly limited, and the beverage can be of any type, such as carbonated beverage, non-carbonated beverage, alcoholic beverage, non-alcoholic beverage, tea beverage, nutritional beverage, or functional beverage. In this invention, preferred types of the beverage include tea beverages such as green tea, roasted green tea, blend tea, barley tea, mate tea, jasmine tea, black tea, oolong tea, and du zhong tea.

The beverage of the present invention may have incorporated therein not only the aforementioned components but also any different additives and others depending on the type of the beverage. Examples of such different additives include sweeteners made with other sugars than the aforementioned ones, acidulants, flavorants, vitamins, pigments, antioxidants, emulsifiers, preservatives, extracts, dietary fibers, pH adjustors, and quality stabilizers.

The beverage of the present invention can be produced by incorporating the aforementioned components in appropriate amounts. When the beverage of this invention is provided as a tea beverage, the beverage can be produced by incorporating tea leaves, an extract therefrom, or the like. Further, the beverage of this invention is made into a packaged beverage by following a sterilization step or the like depending on the need. For example, the beverage can be made into a sterilized, packaged beverage by following the procedure involving the steps of packing the beverage into a container and then subjecting the packed beverage to heat sterilization or the like, or the procedure involving the steps of sterilizing the beverage and then packing it into a container in an aseptic environment.

The type of the container is not particularly limited, and examples of the container include PET bottle, can, glass bottle, and carton. In particular, clear and colorless PET bottles are preferable, because the color of beverages contained in such containers can be easily discerned, and because beverages packed in such containers are easy to handle.

### EXAMPLES

Hereunder, the present invention will be specifically described in detail by way of experimental and working examples, but this invention is not limited to these examples. In addition, all numerical ranges given herein include their endpoints, unless otherwise specified.

### (1) Study of ethanol addition

Beverages (samples) for evaluation were prepared using the olive fruit extract HT-6 (produced by Eisai Food & Chemical Co., Ltd.). More specifically, different beverage samples, each with a total volume of 100 mL, were prepared by dissolving the olive fruit extract and ethanol (produced by Nacalai Tesque, Inc.) in water so as to ensure that hydroxytyrosol and ethanol were present in the amounts (concentrations) shown in Table 1 below. The amount of the olive fruit extract added was calculated on the assumption that the olive fruit extract contained 6% (w/w) hydroxytyrosol. All of the prepared beverages were visually confirmed to be clear and colorless. Thereafter, the beverages were packed in clear and colorless PET containers, and irradiated with ultraviolet light at 180 Wh/m² for 2 hours and 20 minutes using a 7.5 kW super xenon weather meter (produced by Suga Test Instruments Co., Ltd.).

The UV-irradiated beverages were subjected to sensory evaluation of flavor by three well-trained professional panelists. The beverages were kept at about 20°C during the sensory evaluation. The flavor of the beverages was evaluated mainly from the viewpoint of resinous taste. To be specific, the beverages were rated according to the following criteria.
1 point: Tastes strongly resinous or gives too strong a sense of alcohol.
2 points: Tastes resinous or gives a sense of alcohol.
3 points: Tastes slightly resinous or gives a slight sense of alcohol.
4 points: Hardly tastes resinous.
5 points: Does not taste resinous.

The results are shown in Table 1. Many of the beverages containing 0.5 to 10 mg/100 mL of hydroxytyrosol did not taste resinous when 0.01 wt.% or more ethanol was added. In particular, addition of 0.01 to 0.5 wt.% ethanol was found to have a significant effect on flavor improvement. It was also found that even the beverages containing 50 mg/100 mL of hydroxytyrosol were improved in resinous taste by addition of ethanol. Thus, it was found that ethanol not only exerts an adequate flavor improvement effect on beverages with low hydroxytyrosol concentrations, but also takes some effect even on beverages with high hydroxytyrosol concentrations.

**[Table 1]**

| | 1 | 2 | 3 | 4 | 5 | 6 |
|---|---|---|---|---|---|---|
| Hydroxytyrosol (mg/100 mL) | 0.5 | 0.5 | 0.5 | 0.5 | 0.5 | 0.5 |
| Ethanol (wt.%) | 0 | 0.01 | 0.05 | 0.1 | 0.5 | 1 |
| Rating | 2 | 4 | 5 | 5 | 5 | 3 |
| | | | | | | |

| | 7 | 8 | 9 | 10 | 11 | 12 |
|---|---|---|---|---|---|---|
| Hydroxytyrosol (mg/100 mL) | 1 | 1 | 1 | 1 | 1 | 1 |
| Ethanol (wt.%) | 0 | 0.01 | 0.05 | 0.1 | 0.5 | 1 |
| Rating | 2 | 4 | 5 | 5 | 4 | 3 |
| | | | | | | |

| | 13 | 14 | 15 | 16 | 17 | 18 |
|---|---|---|---|---|---|---|
| Hydroxytyrosol (mg/100 mL) | 2.5 | 2.5 | 2.5 | 2.5 | 2.5 | 2.5 |
| Ethanol (wt.%) | 0 | 0.01 | 0.05 | 0.1 | 0.5 | 1 |
| Rating | 2 | 4 | 5 | 5 | 4 | 3 |
| | | | | | | |

| | 19 | 20 | 21 | 22 | 23 | 24 |
|---|---|---|---|---|---|---|
| Hydroxytyrosol (mg/100 mL) | 5 | 5 | 5 | 5 | 5 | 5 |
| Ethanol (wt.%) | 0 | 0.01 | 0.05 | 0.1 | 0.5 | 1 |
| Rating | 1 | 3 | 4 | 4 | 3 | 2 |
| | | | | | | |

| | 25 | 26 | 27 | 28 | 29 | 30 |
|---|---|---|---|---|---|---|
| Hydroxytyrosol (mg/100 mL) | 10 | 10 | 10 | 10 | 10 | 10 |
| Ethanol (wt.%) | 0 | 0.01 | 0.05 | 0.1 | 0.5 | 1 |
| Rating | 1 | 3 | 3 | 3 | 3 | 2 |
| | | | | | | |

| | 31 | 32 | 33 | 34 | 35 | 36 |
|---|---|---|---|---|---|---|
| Hydroxytyrosol (mg/100 mL) | 50 | 50 | 50 | 50 | 50 | 50 |
| Ethanol (wt.%) | 0 | 0.01 | 0.05 | 0.1 | 0.5 | 1 |
| Rating | 1 | 2 | 2 | 2 | 1 | 1 |

### (2) Study of propylene glycol addition

Beverages (samples) for evaluation were prepared using the olive fruit extract HT-6 (produced by Eisai Food & Chemical Co., Ltd.). More specifically, different beverage samples, each with a total volume of 100 mL, were prepared by dissolving the olive fruit extract and propylene glycol (produced by Nacalai Tesque, Inc.) in water so as to ensure that hydroxytyrosol and propylene glycol were present in the amounts (concentrations) shown in Table 2 below. The amount of the olive fruit extract added was calculated on the assumption that the olive fruit extract contained 6% (w/w) hydroxytyrosol. All of the prepared beverages were visually confirmed to be clear and colorless. Thereafter, the beverages were packed in clear and colorless PET containers, and irradiated with ultraviolet light at 180 Wh/m² for 2 hours and 20 minutes using a 7.5 kW super xenon weather meter (produced by Suga Test Instruments Co., Ltd.).

The UV-irradiated beverages were subjected to sensory evaluation of flavor by following the same procedure as described above.

The results are shown in Table 2. Many of the beverages containing 0.5 to 10 mg/100 mL of hydroxytyrosol did not taste resinous when 0.01 wt.% or more propylene glycol was added. In particular, addition of 0.01 to 0.5 wt.% propylene glycol was found to have a significant effect on flavor improvement. It was also found that even the beverages containing 50 mg/100 mL of hydroxytyrosol were improved in resinous taste by addition of propylene glycol. Thus, it was found that propylene glycol not only exerts an adequate flavor improvement effect on beverages with low hydroxytyrosol concentrations, but also takes some effect even on beverages with high hydroxytyrosol concentrations.

**[Table 2]**

| | 1 | 2 | 3 | 4 | 5 | 6 |
|---|---|---|---|---|---|---|
| Hydroxytyrosol (mg/100 mL) | 0.5 | 0.5 | 0.5 | 0.5 | 0.5 | 0.5 |
| PG (wt.%) | 0 | 0.01 | 0.05 | 0.1 | 0.5 | 1 |
| Rating | 2 | 4 | 5 | 5 | 5 | 3 |
| | | | | | | |

| | 7 | 8 | 9 | 10 | 11 | 12 |
|---|---|---|---|---|---|---|
| Hydroxytyrosol (mg/100 mL) | 1 | 1 | 1 | 1 | 1 | 1 |
| PG (wt.%) | 0 | 0.01 | 0.05 | 0.1 | 0.5 | 1 |
| Rating | 2 | 4 | 5 | 5 | 4 | 3 |
| | | | | | | |

| | 13 | 14 | 15 | 16 | 17 | 18 |
|---|---|---|---|---|---|---|
| Hydroxytyrosol (mg/100 mL) | 2.5 | 2.5 | 2.5 | 2.5 | 2.5 | 2.5 |
| PG (wt.%) | 0 | 0.01 | 0.05 | 0.1 | 0.5 | 1 |
| Rating | 2 | 4 | 5 | 5 | 4 | 3 |
| | | | | | | |

| | 19 | 20 | 21 | 22 | 23 | 24 |
|---|---|---|---|---|---|---|
| Hydroxytyrosol (mg/100 mL) | 5 | 5 | 5 | 5 | 5 | 5 |
| PG (wt.%) | 0 | 0.01 | 0.05 | 0.1 | 0.5 | 1 |
| Rating | 1 | 3 | 4 | 4 | 3 | 2 |
| | | | | | | |

| | 25 | 26 | 27 | 28 | 29 | 30 |
|---|---|---|---|---|---|---|
| Hydroxytyrosol (mg/100 mL) | 10 | 10 | 10 | 10 | 10 | 10 |
| PG (wt.%) | 0 | 0.01 | 0.05 | 0.1 | 0.5 | 1 |
| Rating | 1 | 3 | 3 | 3 | 3 | 2 |
| | | | | | | |

| | 31 | 32 | 33 | 34 | 35 | 36 |
|---|---|---|---|---|---|---|
| Hydroxytyrosol (mg/100 mL) | 50 | 50 | 50 | 50 | 50 | 50 |
| PG (wt.%) | 0 | 0.01 | 0.05 | 0.1 | 0.5 | 1 |
| Rating | 1 | 2 | 2 | 2 | 1 | 1 |

### (3) Study of caffeine addition

Beverages (samples) for evaluation were prepared using the olive fruit extract HT-6 (produced by Eisai Food & Chemical Co., Ltd.). More specifically, different beverage samples, each with a total volume of 100 mL, were prepared by dissolving the olive fruit extract and caffeine (produced by Shiratori Pharmaceutical Co., Ltd.) in water so as to ensure that hydroxytyrosol and caffeine were present in the amounts (concentrations) shown in Table 3 below. The amount of the olive fruit extract added was calculated on the assumption that the olive fruit extract contained 6% (w/w) hydroxytyrosol.

The prepared beverages were subjected to sensory evaluation of flavor. The flavor of the beverages was evaluated mainly from the viewpoint of astringent taste. To be specific, the beverages were rated by three well-trained professional panelists on a ten-point grading scale, consisting of: 1 point = tastes the most favorable with no sense of astringency; 2 points = tastes slightly astringent but is acceptable; 3 points = tastes astringent; and 4 to 10 points = tastes strongly astringent. The beverages for evaluation were used as they were when prepared at room temperature.

The results are shown in Table 3. Many of the beverages containing 0.8 to 5 mg/100 mL of hydroxytyrosol were improved in flavor with no sense of astringency when 10 mg/100 mL or more of caffeine was added. In particular, all of those beverages to which 110 mg/100 mL or more of caffeine was added tasted most favorable with no sense of astringency. Further, the beverages containing 10 mg/100 mL or more of hydroxytyrosol tasted strongly astringent, but the astringent taste of those beverages were suppressed by addition of caffeine. Thus, it was found that caffeine not only exerts an adequate flavor improvement effect on beverages with low hydroxytyrosol concentrations, but also takes some effect even on beverages with high hydroxytyrosol concentrations.

**[Table 3]**

| | 1 | 2 | 3 | 4 | 5 | 6 |
|---|---|---|---|---|---|---|
| Hydroxytyrosol (mg/100 mL) | 0.8 | 0.8 | 0.8 | 0.8 | 0.8 | 0.8 |
| Caffeine (mg/100 mL) | 0 | 10 | 60 | 110 | 160 | 210 |
| Rating | 3 | 1 | 1 | 1 | 1 | 1 |
| | | | | | | |

| | 7 | 8 | 9 | 10 | 11 | 12 |
|---|---|---|---|---|---|---|
| Hydroxytyrosol (mg/100 mL) | 1.5 | 1.5 | 1.5 | 1.5 | 1.5 | 1.5 |
| Caffeine (mg/100 mL) | 0 | 10 | 60 | 110 | 160 | 210 |
| Rating | 4 | 2 | 1 | 1 | 1 | 1 |
| | | | | | | |

| | 13 | 14 | 15 | 16 | 17 | 18 |
|---|---|---|---|---|---|---|
| Hydroxytyrosol (mg/100 mL) | 2.5 | 2.5 | 2.5 | 2.5 | 2.5 | 2.5 |
| Caffeine (mg/100 mL) | 0 | 10 | 60 | 110 | 160 | 210 |
| Rating | 5 | 2 | 1 | 1 | 1 | 1 |
| | | | | | | |

| | 19 | 20 | 21 | 22 | 23 | ' 24 |
|---|---|---|---|---|---|---|
| Hydroxytyrosol (mg/100 mL) | 5 | 5 | 5 | 5 | 5 | 5 |
| Caffeine (mg/100 mL) | 0 | 10 | 60 | 110 | 160 | 210 |
| Rating | 6 | 3 | 2 | 1 | 1 | 1 |
| | | | | | | |

| | 25 | 26 | 27 | 28 | 29 | 30 |
|---|---|---|---|---|---|---|
| Hydroxytyrosol (mg/100 mL) | 10 | 10 | 21 | 21 | 42 | 42 |
| Caffeine (mg/100 mL) | 0 | 210 | 0 | 210 | 0 | 210 |
| Rating | 7 | 5 | 8 | 7 | 10 | 9 |

### (4) Study of glucose and maltose addition

Beverages (samples) for evaluation were prepared using the olive fruit extract HT-6 (produced by Eisai Food & Chemical Co., Ltd.). More specifically, different beverage samples, each with a total volume of 100 mL, were prepared by dissolving the olive fruit extract, glucose (produced by Showa Sangyo Co., Ltd.) and maltose (produced by Nacalai Tesque, Inc.) in water so as to ensure that hydroxytyrosol, glucose and maltose were present in the amounts (concentrations) shown in Tables 4 and 5 below. The amount of the olive fruit extract added was calculated on the assumption that the olive fruit extract contained 6% (w/w) hydroxytyrosol.

The prepared beverages were subjected to sensory evaluation of flavor by three well-trained professional panelists. The beverages for evaluation were used as they were when prepared at room temperature. The flavor of the beverages was evaluated mainly from the viewpoint of astringent taste. To be specific, the beverages were rated according to the following criteria.
1 point: Tastes too astringent.
2 points: Tastes strongly astringent or sweet.
3 points: Tastes well-balanced between astringent and sweet.
4 points: Tastes more well-balanced between astringent and sweet.
5 points: Gives the most favorable sense of quick sweetness.

The results are shown in Tables 4 and 5. It was found that when glucose and maltose were added to the beverages containing 0.8 to 10 mg/100 mL of hydroxytyrosol so as to give a glucose/maltose ratio of 0.01 to 0.5, the balance of astringency and sweetness in the beverages was improved. In particular, it was found that when glucose and maltose were added to the beverages containing 0.8 to 10 mg/100 mL of hydroxytyrosol so as to give a glucose/maltose ratio of 0.03 to 0.25, the balance of astringency and sweetness in the beverages was further improved.

**[Table 4]**

| | 1 | 2 | 3 | 4 | 5 | 6 | 7 |
|---|---|---|---|---|---|---|---|
| Hydroxytyrosol (mg/100 mL) | 0.8 | 0.8 | 0.8 | 0.8 | 0.8 | 0.8 | 0.8 |
| Glucose (mg/100 mL) | 0 | 70 | 125 | 625 | 1000 | 1670 | 5000 |
| Maltose (mg/100 mL) | 5000 | 4930 | 4875 | 4375 | 4000 | 3330 | 0 |
| Glucose/maltose ratio | 0.00 | 0.01 | 0.03 | 0.14 | 0.25 | 0.50 | - |
| Rating | 2 | 4 | 5 | 5 | 4 | 3 | 2 |
| | | | | | | | |

| | 8 | 9 | 10 | 11 | 12 | 13 | 14 |
|---|---|---|---|---|---|---|---|
| Hydroxytyrosol (mg/100 mL) | 1 | 1 | 1 | 1 | 1 | 1 | 1 |
| Glucose (mg/100 mL) | 0 | 70 | 125 | 625 | 1000 | 1670 | 5000 |
| Maltose (mg/100 mL) | 5000 | 4930 | 4875 | 4375 | 4000 | 3330 | 0 |
| Glucose/maltose ratio | 0.00 | 0.01 | 0.03 | 0.14 | 0.25 | 0.50 | - |
| Rating | 2 | 4 | 5 | 5 | 4 | 3 | 2 |
| | | | | | | | |

| | 15 | 16 | 17 | 18 | 19 | 20 | 21 |
|---|---|---|---|---|---|---|---|
| Hydroxytyrosol (mg/100 mL) | 2.5 | 2.5 | 2.5 | 2.5 | 2.5 | 2.5 | 2.5 |
| Glucose (mg/100 mL) | 0 | 70 | 125 | 625 | 1000 | 1670 | 5000 |
| Maltose (mg/100 mL) | 5000 | 4930 | 4875 | 4375 | 4000 | 3330 | 0 |
| Glucose/maltose ratio | 0.00 | 0.01 | 0.03 | 0.14 | 0.25 | 0.50 | - |
| Rating | 2 | 4 | 5 | 5 | 4 | 3 | 2 |
| | | | | | | | |

| | 22 | 23 | 24 | 25 | 26 | 27 | 28 |
|---|---|---|---|---|---|---|---|
| Hydroxytyrosol (mg/100 mL) | 5 | 5 | 5 | 5 | 5 | 5 | 5 |
| Glucose (mg/100 mL) | 0 | 70 | 125 | 625 | 1000 | 1670 | 5000 |
| Maltose (mg/100 mL) | 5000 | 4930 | 4875 | 4375 | 4000 | 3330 | 0 |
| Glucose/maltose ratio | 0.00 | 0.01 | 0.03 | 0.14 | 0.25 | 0.50 | - |
| Rating | 1 | 3 | 4 | 4 | 4 | 3 | 2 |
| | | | | | | | |

| | 29 | 30 | 31 | 32 | 33 | 34 | 35 |
|---|---|---|---|---|---|---|---|
| Hydroxytyrosol (mg/100 mL) | 10 | 10 | 10 | 10 | 10 | 10 | 10 |
| Glucose (mg/100 mL) | 0 | 70 | 125 | 625 | 1000 | 1670 | 5000 |
| Maltose (mg/100 mL) | 5000 | 4930 | 4875 | 4375 | 4000 | 3330 | 0 |
| Glucose/maltose ratio | 0.00 | 0.01 | 0.03 | 0.14 | 0.25 | 0.50 | - |
| Rating | 1 | 3 | 3 | 3 | 3 | 3 | 2 |

**[Table 5]**

| | 36 | 37 | 38 | 39 | 40 | 41 | 42 |
|---|---|---|---|---|---|---|---|
| Hydroxytyrosol (mg/100 mL) | 50 | 50 | 50 | 50 | 50 | 50 | 50 |
| Glucose (mg/100 mL) | 0 | 70 | 125 | 625 | 1000 | 1670 | 5000 |
| Maltose (mg/100 mL) | 5000 | 4930 | 4875 | 4375 | 4000 | 3330 | 0 |
| Glucose/maltose ratio | 0.00 | 0.01 | 0.03 | 0.14 | 0.25 | 0.50 | - |
| Rating | 1 | 2 | 2 | 2 | 2 | 2 | 2 |

## Claims

1. A beverage comprising 0.5 to 50 mg/100 mL of hydroxytyrosol, and ethanol or propylene glycol.

2. A beverage comprising 0.5 to 50 mg/100 mL of hydroxytyrosol, and ethanol and propylene glycol.

3. The beverage according to claim 1 or 2, wherein ethanol is present in an amount of 0.005 to 1.5 wt.%.

4. The beverage according to any one of claims 1 to 3, wherein propylene glycol is present in an amount of 0.005 to 1.5 wt.%.

5. The beverage according to any one of claims 1 to 4, wherein hydroxytyrosol and ethanol are present at a weight ratio ([hydroxytyrosol]/[ethanol]) of 0.1 to 2000.

6. The beverage according to any one of claims 1 to 5, wherein hydroxytyrosol and propylene glycol are present at a weight ratio ([hydroxytyrosol]/[propylene glycol]) of 0.1 to 2000.

7. The beverage according to any one of claims 2 to 6, wherein ethanol and propylene glycol are present at a weight ratio ([ethanol]/[propylene glycol]) of 0.01 to 100.

8. The beverage according to any one of claims 1 to 7, wherein the beverage is a clear beverage.

9. A method for improving the flavor of a beverage comprising 0.5 to 50 mg/100 mL of hydroxytyrosol, the method comprising the step of incorporating ethanol or propylene glycol.

10. A beverage comprising 0.5 to 50 mg/100 mL of hydroxytyrosol, and caffeine.

11. The beverage according to claim 10, wherein caffeine is present at a concentration of 10 to 210 mg/100 mL.

12. The beverage according to claim 10 or 11, wherein hydroxytyrosol and caffeine are present at a weight ratio ([hydroxytyrosol]/[caffeine]) of 0.003 to 1.

13. The beverage according to any one of claims 10 to 12, wherein the beverage is a tea beverage.

14. The beverage according to any one of claims 10 to 12, wherein the beverage is a coffee beverage.

15. A method for improving the flavor of a beverage comprising 0.5 to 50 mg/100 mL of hydroxytyrosol, the method comprising the step of incorporating caffeine.

16. A beverage comprising 0.5 to 50 mg/100 mL of hydroxytyrosol, and further comprising glucose and maltose at a (weight) ratio of [glucose]/[maltose] of 0.001 to 1.

17. The beverage according to claim 16, wherein hydroxytyrosol, and glucose and maltose are present at a weight ratio ([hydroxytyrosol]/[glucose]+[maltose]) of 0.0001 to 0.005.

18. The beverage according to claim 16 or 17, wherein the beverage is a tea beverage.

19. A method for improving the flavor of a beverage comprising 0.5 to 50 mg/100 mL of hydroxytyrosol, the method comprising the step of adjusting the (weight) ratio of [glucose]/[maltose] in the beverage to be in the range of 0.001 to 1.
